# EUROPEAN PATENT APPLICATION

(11) **EP 4 851 577 A1**
(43) Date of publication of application: **09.12.2026**
(21) Application number: 24921904.9
(22) Date of filing: 20.12.2024
(51) Int. Cl.: G01B 21/08, G01B 15/02

(54) **THICKNESS MEASUREMENT DEVICE**

(30) Priority: 30.01.2024 JP 2024012073
(71) Applicant: Yokogawa Electric Corporation, Musashino-shi, Tokyo 180-8750 (JP)
(72) Inventor: TERAJIMA, Minoru, Musashino-shi, Tokyo 180-8750 (JP); KIYOTO, Akira, Musashino-shi, Tokyo 180-8750 (JP)
(74) Representative: Winter, Brandl - Partnerschaft mbB
(86) International application number: PCT/JP2024/045309
(87) International publication number: WO 2025/164151

(57) **Abstract**

A thickness measurement apparatus (1) includes a plate (4) in which a long hole (43) that extends in a first direction is formed, a first guide portion (5) that is provided on a first surface (41) of the plate (4) on one side of the long hole (43) and that extends along the first direction, a first measurement portion (7) that is supported by the first guide portion (5) and that is movable along the first direction, a second guide portion (6) that is provided on the first surface (41) on the other side of the long hole (43) and that extends along the first direction, and a second measurement portion (8) that is supported by the second guide portion (6) and that is movable along the first direction, wherein the thickness measurement apparatus measures a thickness of an object to be measured that passes through the long hole (43) and a gap between the first measurement portion (7) and the second measurement portion (8).

## Description

### Field

The present invention relates to a thickness measurement apparatus.

### Background

There is a known thickness measurement apparatus that is equipped with two measurement portions that are disposed opposite each other, and that measures a thickness of an object to be measured that passes through between the measurement portions. As disclosed in Patent Literature 1, the thickness measurement apparatus is equipped with a beam that supports one of the measurement portions from above, and a beam that supports the other of the measurement portions from below. The two measurement portions move along the beams in synchronization with each other. By causing the object to be measured to pass through between the two measurement portions while the two measurement portions to move in synchronization with each other, a measurement of the thickness is performed across a wide range of the object to be measured.

An example of a technique for measuring a thickness includes a technique for detecting radiation that has been radiated from the one measurement portion by the other measurement portion, calculating an amount of attenuation of radiation indicated at the time at which the radiation penetrates the object to be measured, and measuring the thickness on the basis of the calculated amount of attenuation.

With the thickness measurement apparatus as described above, the two beams that are provided at an upper part and a lower part are supported by a stand that is coupled by both ends of the beams. The stand is fixed to a surface of the floor.

### Citation List

### Patent Literature

Patent Literature 1: Japanese Laid-open Patent Publication No. 2008-128756

### Summary

### Technical Problem

In order to measure the thickness of the object to be measured with high accuracy, there is a need to control a position of the measurement portion with high accuracy. As disclosed in Patent Literature 1, with a configuration in which the measurement portions are supported by the beams that are respectively provided above and below and that are coupled by the stand, high stiffness property, shape accuracy, and assembly accuracy are needed for the beams and the stand, so that this leads to an increase in size and higher costs of the device.

An object of the present invention is to obtain a thickness measurement apparatus capable of a thickness measurement with high accuracy with a simple configuration. Solution to Problem

A thickness measurement apparatus includes a plate in which a long hole that extends in a first direction is formed, a first guide portion that is provided on a first surface of the plate on one side of the long hole and that extends along the first direction, a first measurement portion that is supported by the first guide portion and that is movable along the first direction, a second guide portion that is provided on the first surface on the other side of the long hole and that extends along the first direction, and a second measurement portion that is supported by the second guide portion and that is movable along the first direction, wherein the thickness measurement apparatus measures a thickness of an object to be measured that passes through the long hole and a gap between the first measurement portion and the second measurement portion.

### Advantageous Effects of Invention

According to the present invention, an advantage is provided in that it is possible to obtain a thickness measurement apparatus capable of a thickness measurement with high accuracy with a simple configuration.

### Brief Description of Drawings

FIG. 1 is a perspective view illustrating a schematic configuration of a thickness measurement apparatus according to a first embodiment.
FIG. 2 is a front view of a plate according to the first embodiment.
FIG. 3 is a cross-sectional view taken along line III-III illustrated in FIG. 2.
FIG. 4 is a partial enlarged perspective view of an enlarged portion A illustrated in FIG. 1.
FIG. 5 is a diagram illustrating an installation example of the thickness measurement apparatus according to the first embodiment.

### Description of Embodiments

Hereinafter, preferred embodiments of a thickness measurement apparatus according to the present invention will be explained in detail below with reference to the accompanying drawings. Furthermore, the present invention is not limited to the embodiments described below.

### [First Embodiment]

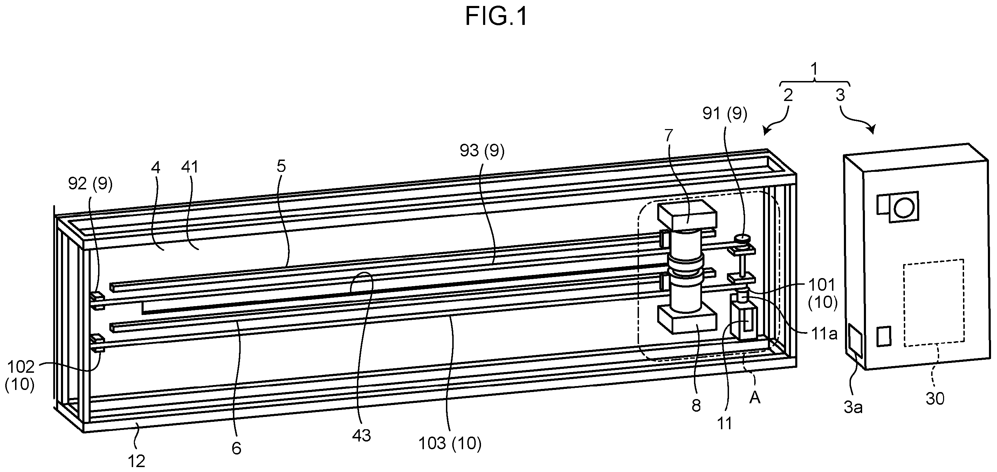

FIG. 1 is a perspective view illustrating a schematic configuration of a thickness measurement apparatus according to a first embodiment. A thickness measurement apparatus 1 is an apparatus that measures a thickness of an object that is to be measured and that is in a form of a film or a sheet shape, such as an electrode sheet for a secondary battery, a separator sheet, paper, plastic sheet for packaging, building material sheet, functional material sheet, an optical film, or a metal foil. The thickness measurement apparatus 1 includes a measurement unit 2 and a control box 3.

The measurement unit 2 includes a plate 4, a first guide portion 5, a second guide portion 6, a first measurement portion 7, a second measurement portion 8, a first scanning unit 9, a second scanning unit 10, a drive device 11, and a frame 12.

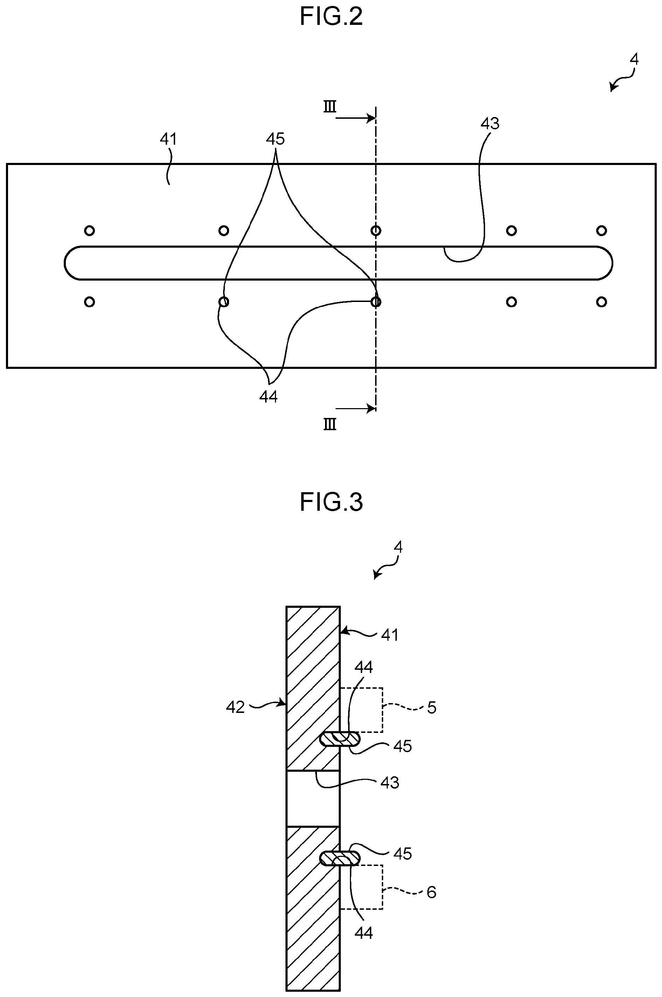

FIG. 2 is a front view of the plate according to the first embodiment. FIG. 3 is a cross-sectional view taken along line III-III illustrated in FIG. 2. The plate 4 is a member that is formed in a plate shape and that has a first surface 41 formed in a rectangular shape. The plate 4 is made of, for example, a resin or metal. A long hole 43 that extends along a first direction is formed on the first surface 41 of the plate 4. The embodiment is not limited to this example, but, in the first embodiment, the first direction matches a longitudinal direction of the first surface 41. Furthermore, in the first embodiment, a direction perpendicular to the first direction, that is, a lateral direction of the first surface 41, is defined as a second direction. As illustrated in FIG. 2, the long hole 43 formed on the first surface 41 passes through a second surface 42 that is a back surface. The long hole 43 is a hole that is formed at the plate 4 in order for the object to be measured to pass through the long hole 43.

A plurality of holes 44 are formed on the first surface 41 of the plate 4. The plurality of holes 44 are formed side by side on both sides of the long hole 43 along the first direction. A plurality of pins 45 are inserted into the plurality of respective holes 44. The pins 45 may be prevented from falling out by being pressed into the holes 44, or may be prevented from falling out by using an adhesive agent, or the like. The holes 44 are able to be formed with high accuracy in specified positions by using, for example, numerical control (NC) machining. The holes 44 and the pins 45 functions as positioning portions that perform positioning of the first guide portion 5 and the second guide portion 6 that will be described later.

A description will be made by referring back to FIG. 1, the first guide portion 5 is fixed to the first surface 41 of the plate 4. The first guide portion 5 is provided on one side of the long hole 43 along the second direction. The first guide portion 5 is a rail member that extends along the first direction.

The second guide portion 6 is fixed to the first surface 41 of the plate 4. The second guide portion 6 is provided on the other side of the long hole 43 along the second direction. The second guide portion 6 is a rail member that extends along the first direction. The first guide portion 5 and the second guide portion 6 are arranged in the second direction so as to sandwich the long hole 43.

The first guide portion 5 and the second guide portion 6 are fixed while coming into contact with the pins 45 that are provided on the first surface 41. As described above, the holes 44, into which the respective pins 45 are inserted, can be formed in specified positions with high accuracy by using the NC machining or the like, so that it is possible to accurately perform positioning by fixing both of the first guide portion 5 and the second guide portion 6 while causing the first guide portion 5 and the second guide portion 6 to come into contact with the respective pins 45. It is possible to accurately perform positioning by causing the first guide portion 5 and the second guide portion 6 to come into contact with the respective pins 45, so that it is possible to perform fixation work of the first guide portion 5 and the second guide portion 6 more easily.

The first measurement portion 7 is attached to the first guide portion 5 so as to be movable in a direction in which the first guide portion 5 extends, that is, a direction along the first direction. The second measurement portion 8 is attached to the second guide portion 6 so as to be movable in a direction in which the second guide portion 6 extends, that is, a direction along the first direction.

When both of the first measurement portion 7 and the second measurement portion 8 are present at the same position along the first direction, a gap is provided between the first measurement portion 7 and the second measurement portion 8. In the front view, the gap that is provided between the first measurement portion 7 and the second measurement portion 8 overlaps with the long hole 43 that is formed on the plate 4. Therefore, the object to be measured that passes through the inner side of the long hole 43 passes through the gap that is provided between the first measurement portion 7 and the second measurement portion 8.

In the thickness measurement apparatus 1, the first measurement portion 7 and the second measurement portion 8 work in cooperation with each other to measure the thickness of the object to be measured. For example, one of the first measurement portion 7 and the second measurement portion 8 functions as an emission portion that emits radiation or infrared light. Furthermore, the other one of the first measurement portion 7 and the second measurement portion 8 functions as a detection portion that detects the emitted radiation or infrared light. The radiation or the infrared light passes through the object to be measured and reaches the detection portion. In a case of the radiation, the radiation attenuates when the radiation passes through the object to be measured, whereas, in a case of the infrared light, the infrared light is absorbed by the object to be measured when the infrared light passes through the object to be measured. An amount of attenuation of the radiation and an amount of absorption of the infrared light are determined in accordance with the thickness or the quality of material of the object to be measured. By calculating the amount of attenuation and the amount of absorption on the basis of the detection result of the detection portion, it is possible to calculate the thickness of the object to be measured.

The first scanning unit 9 includes a first driving pulley 91, a first driven pulley 92, and a first belt 93.

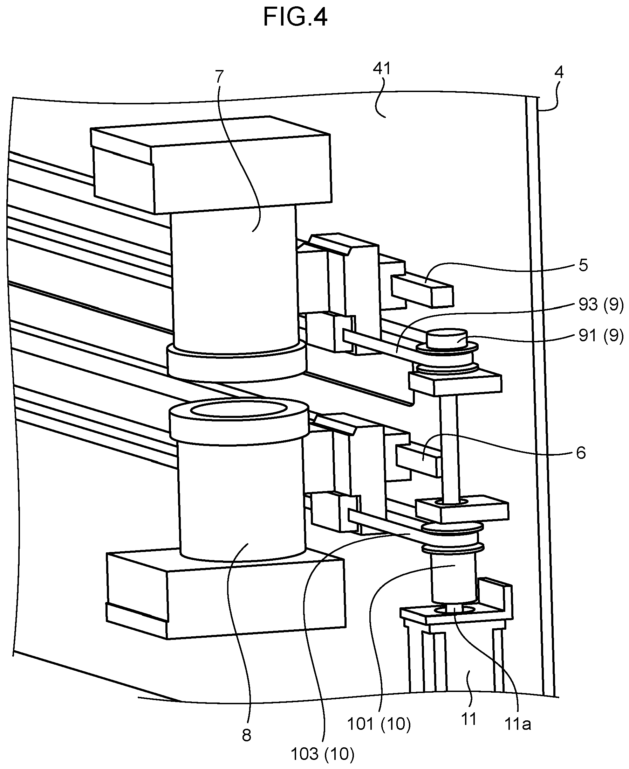

FIG. 4 is a partial enlarged perspective view of an enlarged portion A illustrated in FIG. 1. The first driving pulley 91 is provided on one side of the long hole 43 along the first direction. The first driving pulley 91 is attached to the first surface 41 so as to be rotatable about a rotary shaft that is parallel to the second direction.

A description will be made by referring back to FIG. 1. The first driven pulley 92 is provided on the other side of the long hole 43 along the first direction. The first driven pulley 92 is attached to the first surface 41 so as to be rotatable about a rotary shaft that is parallel to the second direction. The first driving pulley 91 and the first driven pulley 92 are arranged in the first direction so as to sandwich the long hole 43.

The first belt 93 is hung across the first driving pulley 91 and the first driven pulley 92. As a result of this, the first belt 93 extends along the first direction on the one side of the long hole 43 along the second direction. As a result of the first driving pulley 91 rotating, the first belt 93 moves in the first direction, and the first driven pulley 92 also rotates in accordance with the movement of the first belt 93.

As illustrated in FIG. 4, the first measurement portion 7 is fixed to the first belt 93. Since the first measurement portion 7 is fixed to the first belt 93, by rotating the first driving pulley 91, it is possible to move the first measurement portion 7 in the first direction together with the first belt 93.

A second driving pulley 101 is provided on one side of the long hole 43 along the first direction. The second driving pulley 101 is attached to the first surface 41 so as to be rotatable about a rotary shaft that is parallel to the second direction. Moreover, the rotary shaft of the second driving pulley 101 is constituted so as to be coaxial with the rotary shaft of the first driving pulley 91.

A description will be made by referring back to FIG. 1. A second driven pulley 102 is provided on the other side of the long hole 43 along the first direction. The second driven pulley 102 is attached to the first surface 41 so as to be rotatable about a rotary shaft that is parallel to the second direction. The second driving pulley 101 and the second driven pulley 102 are arranged in the first direction so as to sandwich the long hole 43. Moreover, the rotary shaft of the second driven pulley 102 is constituted so as to be coaxial with the rotary shaft of the first driven pulley 92.

A second belt 103 is hung across the second driving pulley 101 and the second driven pulley 102. As a result of this, the second belt 103 extends along the first direction on the other side (on the opposite side of the first belt 93 based on the long hole 43) of the long hole 43 along the second direction. The first belt 93 and the second belt 103 are arranged in the second direction so as to sandwich the long hole 43. As a result of the second driving pulley 101 rotating, the second belt 103 moves in the first direction, and the second driven pulley 102 also rotates in accordance with the movement of the second belt 103.

As illustrated in FIG. 4, the second measurement portion 8 is fixed to the second belt 103. Since the second measurement portion 8 is fixed to the second belt 103, by rotating the second driving pulley 101, it is possible to move the second measurement portion 8 in the first direction together with the second belt 103.

The drive device 11 includes a motor. The drive device 11 is attached to the first surface 41 of the plate 4. As another example, the drive device 11 may be attached to the frame 12. An output shaft 11a of the drive device 11 is coupled to the first driving pulley 91 and the second driving pulley 101. As a result of the drive device 11 being driven, the output shaft 11a rotates, and both of the first driving pulley 91 and the second driving pulley 101 rotate at the same time. Therefore, as a result of the drive device 11 being driven, both of the first measurement portion 7 that is fixed to the first belt 93 and the second measurement portion 8 that is fixed to the second belt 103 are moved in the first direction in synchronization with each other.

The frame 12 is a frame member that is made of metal and that is fixed to the first surface 41 of the plate 4. However, the frame 12 may be constituted from another material made of a resin or the like as long as the material is able to maintain an appropriate strength. Moreover, the frame 12 may also be omitted.

A description will be made by referring back to FIG. 1. The control box 3 is formed in a box shape. The control box 3 is not fixed to the plate 4, and is provided separately from the measurement unit 2. In the interior portion of the control box 3, component elements other than a mechanical element that is used to move the first measurement portion 7 and the second measurement portion 8 are accommodated. For example, in the interior portion of the control box 3, a power supply and a control unit 30 are accommodated. The control unit 30 includes, for example, a control device (a programmable logic controller (PLC), etc.), a control substrate, and a drive device driver. In a case where a section that is driven by using air is present in the first measurement portion 7 or the second measurement portion 8, a device for air or the like may be accommodated in the interior portion of the control box 3. An example in which air is used includes a configuration in which, in a case where the first measurement portion 7 accommodates a radiation source and emits radiation, a shutter that closes the opening through which radiation is emitted is opened and closed by air. The control unit 30 is one example of the control unit that controls a movement of each of the first measurement portion 7 and the second measurement portion 8. The control box 3 is constituted to provide an opening 3a that allows a power supply line that connects the component elements that are provided in the interior portion and the elements that are provided on the plate 4, a signal line, a communication line, a pipe for flowing air, or the like to pass through.

The thickness measurement apparatus 1 described above includes the plate 4 in which the long hole 43 that extends in the first direction is formed, the first guide portion 5 that is provided on the first surface 41 of the plate 4 on one side of the long hole 43 and that extends along the first direction, the first measurement portion 7 that is supported by the first guide portion 5 and that is constituted so as to be movable along the first direction, the second guide portion 6 that is provided on the first surface 41 on the other side of the long hole 43 and that extends along the first direction, and the second measurement portion 8 that is supported by the second guide portion 6 and that is constituted so as to be movable along the first direction, and measures the thickness of an object to be measured 15 that passes through the long hole 43 and the gap between the first measurement portion 7 and the second measurement portion 8.

In order to measure the thickness of the object to be measured 15 with high accuracy, there is a need to control the positions of the first measurement portion 7 and the second measurement portion 8 with high accuracy. In order to control the positions of the first measurement portion 7 and the second measurement portion 8 with high accuracy, the positions of the first guide portion 5 and the second guide portion 6 that support these measurement portions need to be determined with high accuracy. In the present embodiment, the first guide portion 5 and the second guide portion 6 are fixed to the same surface (the first surface 41), so that a misalignment is less likely to occur between the first guide portion 5 and the second guide portion 6. Furthermore, the plate 4 to which the first guide portion 5 and the second guide portion 6 are fixed is a member having a plate shape, and therefore, the stiffness property is improved. Because of this, a distortion is less likely to occur at the plate 4 due to an influence of the distortion of the installation surface on which the measurement unit 2 is installed, or the like, and, in addition, a misalignment is less likely to occur between the first guide portion 5 and the second guide portion 6. Furthermore, the first guide portion 5 and the second guide portion 6 are fixed to the same surface (the first surface 41), so that even when a difference in temperature occurs between sections included in the plate 4, a disparity is less likely to occur in the distortion generated between the sections. Furthermore, the first guide portion 5 and the second guide portion 6 are fixed to the first surface 41 along substantially the entire of the length direction, so that a distortion is less likely to occur due to the weight of each of the first measurement portion 7 and the second measurement portion 8. Furthermore, the first scanning unit 9 and the second scanning unit 10 that cause the first measurement portion 7 and the second measurement portion 8 to respectively move are also fixed to the same surface (the first surface 41), so that a misalignment is less likely to occur between each of the component elements. Therefore, it is possible to measure the thickness of the object to be measured 15 with high accuracy by controlling the positions of the first measurement portion 7 and the second measurement portion 8 with high accuracy.

An improvement in the stiffness property has been enhanced by the plate 4 that is formed in a plate shape, so that an improvement in a reduction in size and weight of the measurement unit 2 is enhanced.

Furthermore, the thickness measurement apparatus 1 may further include the positioning portion that is provided on the first surface 41 and that performs positioning of the first guide portion 5 and positioning of the second guide portion 6. As a result of the positioning portion being provided on the first surface 41, it is possible to perform fixation work of the first guide portion 5 and the second guide portion 6 more easily, and therefore, it is possible to improve ability to assemble the measurement unit 2.

Furthermore, the positioning portion may also include the pins 45 that are formed in the first surface 41 and that are inserted into the holes 44 that are used for the positioning. The holes 44 that are used for the positioning are able to be formed at specified positions with high accuracy by using the NC machining or the like, so that it is possible to easily and accurately perform positioning by fixing the first guide portion 5 and the second guide portion 6 while causing the first guide portion 5 and the second guide portion 6 to come into contact with the respective pins 45.

Furthermore, the first guide portion 5 and the second guide portion 6 are rails, and may be provided by causing the first guide portion 5 and the second guide portion 6 to come into contact with the respective pins 45. As a result of the first guide portion 5 and the second guide portion 6 coming into contact with the pins 45, it is possible to easily and accurately perform positioning of the rails. Therefore, there is no need to adjust the positions after the first measurement portion 7 and the second measurement portion 8 are attached to the first guide portion 5 and the second guide portion 6, respectively.

Furthermore, the thickness measurement apparatus 1 may further include the drive device 11 that is fixed to the first surface 41 and that moves the first measurement portion 7 and the second measurement portion 8. As with the case of the first guide portion 5 and the second guide portion 6, the drive device 11 is also fixed to the first surface 41, so that a mutual misalignment is less likely to occur, and therefore, it is possible to measure the thickness of the object to be measured 15 with high accuracy.

Furthermore, the thickness measurement apparatus 1 may further include the first belt 93 that is provided on one side of the long hole 43 and that extends along the first direction, the first driving pulley 91 and the first driven pulley 92 that move the first belt 93, the second belt 103 that is provided on the other side of the long hole 43 and that extends along the first direction, the second driving pulley 101 and the second driven pulley 102 that move the second belt 103. The drive device 11 includes the motor, and the output shaft 11a of the motor may be coupled to both of the first driving pulley 91 and the second driving pulley 101.

The output shaft 11a of the drive device 11 is coupled to both of the first driving pulley 91 and the second driving pulley 101, so that it is possible to move both of the first measurement portion 7 and the second measurement portion 8 by using a single piece of the drive device 11. As a result of this, it is possible to improve a decrease in size and costs of the measurement unit 2 due to a reduction in the component elements included in the measurement unit 2. Furthermore, it is possible to move both of the first measurement portion 7 and the second measurement portion 8 by only controlling the single piece of the drive device 11, it is possible to simplify drive control.

Furthermore, the thickness measurement apparatus 1 may further include the control box 3 that is provided independently of the plate 4, and the control unit 30 that is accommodated in the control box 3 and that controls movements of the first measurement portion 7 and the second measurement portion 8. It is possible to improve a reduction in size of the measurement unit 2 by consolidating the component elements other than the mechanical element that is used to move the first measurement portion 7 and the second measurement portion 8 into the interior portion of the control box 3.

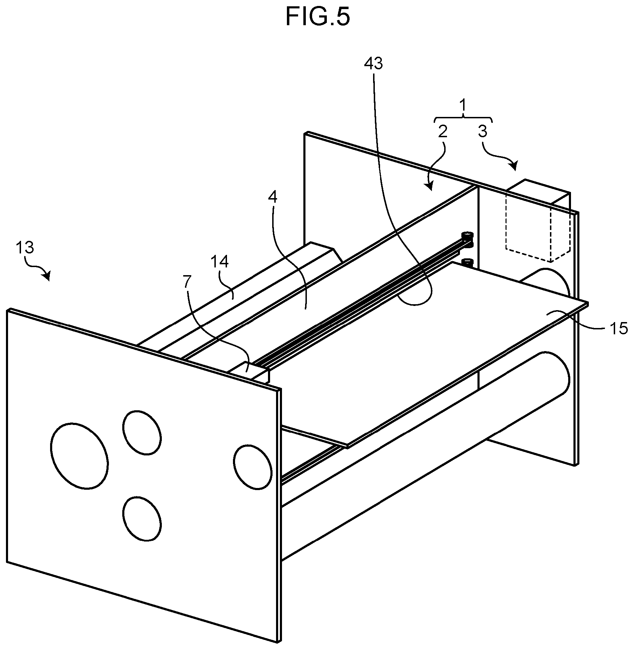

FIG. 5 is a diagram illustrating an installation example of the thickness measurement apparatus according to the first embodiment. In the example illustrated in FIG. 5, an example in which the object to be measured 15 is an electrode sheet is illustrated. On the electrode sheet, for example, slurry is coated on the both surfaces of an aluminum foil. In order to check a weight per unit area (coating basis weight) of the slurry coated onto an aluminum foil or in order to check whether the slurry is uniformly coated, the thickness of the object to be measured 15 is measured by using the thickness measurement apparatus 1. Moreover, in a case where the thickness of the aluminum foil on which the slurry has been coated is measured, the emission portion that is one of the first measurement portion 7 and the second measurement portion 8 functions as a radiation emission portion that emits radiation. In this case, the detection portion functions as a radiation detection portion that detects the radiation.

The measurement unit 2 included in the thickness measurement apparatus 1 is attached to the interior portion of a coater 13 that coats the slurry onto the aluminum foil. The control box 3 included in the thickness measurement apparatus 1 is provided an outside of the coater 13.

In the interior portion of the coater 13, a coating portion 14 that coats the slurry is provided. In the thickness measurement apparatus 1, the size of the measurement unit 2 has been reduced, so that it is possible to provide the measurement unit 2 in the interior of the coater 13 with limited space. By providing the measurement unit 2 in the interior portion of the coater 13, it is possible to measure the weight per unit area or the like immediately after the slurry has been coated, and therefore, it is possible to promptly perform conveyance to a subsequent process or promptly perform reworking in a case where there is a defect in the coating, or the like.

Furthermore, in a manufacturing process of the electrode sheet that is the object to be measured 15, a drying process for drying the slurry by a drying oven is sometimes provided after a coating process for coating the slurry onto the aluminum foil. In this case, in some cases, the drying oven is provided in the vicinity of the measurement unit 2. The temperature of the interior portion of the drying oven is high in order to dry the slurry. Because of this, there may sometimes be a case in which a gas flowing from the drying oven leaks into the measurement unit 2. The high temperature gas flows upward due to convection, and therefore, the temperature of the plate 4 included in the measurement unit 2 tends to be higher in an upper part than a lower part, and a difference in temperature is likely to occur between the upper part and the lower part. Here, both of the upper part and the lower part of the plate 4 are formed by the same first surface 41, so that, even when a difference in temperature occurs, a difference in distortion is less likely to occur between the upper part and the lower part. Because of this, even in a case where the drying oven is provided in the vicinity of the measurement unit 2, it is possible to prevent a decrease in accuracy of the movements among the first guide portion 5 that is attached to the first surface 41, the first measurement portion 7 that moves along the second guide portion 6, and the second measurement portion 8 due to an influence of the temperature.

Moreover, the first guide portion 5 and the second guide portion 6 that guide the first measurement portion 7 and the second measurement portion 8, respectively, are not limited to the rail members, and may be, for example, grooves that are formed on the first surface 41 of the plate 4. Each of the grooves extends along the first direction, and functions as a rail that guide the respective first measurement portion 7 and the second measurement portion 8. Each of the grooves may pass through the plate 4, or does not need to pass through the plate 4.

Furthermore, the number of the drive devices 11 is not limited to one, and the drive device that causes the first driving pulley 91 to drive may be provided independently of the drive device that causes the second driving pulley 101 to drive. Furthermore, the drive device 11 may include a linear motor, instead of providing both of the first scanning unit 9 and the second scanning unit 10. In this case, the stator of the linear motor may be fixed to the plate 4 of the first surface 41, and the first measurement portion 7 and the second measurement portion 8 are fixed to a mover. Furthermore, a ball screw may be used instead of the first belt 93 and the second belt 103.

Furthermore, the plate 4 may be constituted such that the plate 4 is divided into a plurality of sections, and the divided plate members may be coupled with each other. Even in a case in which the plate 4 is divided into a plurality of sections, by fixing both of the first guide portion 5 and the second guide portion 6 to the first surface 41 that is the same surface, it is possible to obtain the same effect as that obtained when the plate 4 is constituted by a single piece.

[Others] Some examples of combinations of the disclosed technical features will be described below.
(1) A thickness measurement apparatus comprising: a plate in which a long hole that extends in a first direction is formed; a first guide portion that is provided on a first surface of the plate on one side of the long hole and that extends along the first direction; a first measurement portion that is supported by the first guide portion and that is movable along the first direction; a second guide portion that is provided on the first surface on the other side of the long hole and that extends along the first direction; and a second measurement portion that is supported by the second guide portion and that is movable along the first direction, wherein the thickness measurement apparatus measures a thickness of an object to be measured that passes through the long hole and a gap between the first measurement portion and the second measurement portion.
(2) The thickness measurement apparatus according to claim 1, further comprising a positioning portion that is provided on the first surface and that performs positioning of the first guide portion and positioning of the second guide portion.
(3) The thickness measurement apparatus according to (2), wherein the positioning portion includes a pin that is formed in the first surface and that is inserted into a hole that is used for the positioning.
(4) The thickness measurement apparatus according to (3), wherein the first guide portion and the second guide portion are rails and are provided so as to come into contact with the pin.
(5) The thickness measurement apparatus according to any one of (1) to (4), further comprising a drive device that moves the first measurement portion and the second measurement portion.
(6) The thickness measurement apparatus according to (5), further comprising a first belt that is provided on one side of the long hole and that extends along the first direction, a first driving pulley and a first driven pulley that move the first belt, a second belt that is provided on the other side of the long hole and that extends along the first direction, and a second driving pulley and a second driven pulley that move the second belt, wherein the drive device includes a motor, and an output shaft of the motor is coupled to the first driving pulley and the second driving pulley.
(7) The thickness measurement apparatus according to any one of (1) to (6), further comprising a control box that is provided independently of the plate, and a control unit that is accommodated in the control box and that controls movements of the first measurement portion and the second measurement portion.
(8) The thickness measurement apparatus according to (5), wherein the drive device includes a linear motor, a stator of the linear motor is fixed to the first surface, and the first measurement portion and the second measurement portion are fixed to a mover of the linear motor.
(9) The thickness measurement apparatus according to any one of (1) to (8), wherein one of the first measurement portion and the second measurement portion is a radiation emission portion that emits radiation, and the other one of the first measurement portion and the second measurement portion is a detection portion that detects the radiation.
(10) The thickness measurement apparatus according to any one of (1) to (9), wherein the plate is divided into a plurality of sections.

### Reference Signs List

- 1: thickness measurement apparatus
- 2: measurement unit
- 3: control box
- 3a: opening
- 30: control unit
- 4: plate
- 41: first surface
- 42: second surface
- 43: long hole
- 44: hole
- 45: pin
- 5: first guide portion
- 6: second guide portion
- 7: first measurement portion
- 8: second measurement portion
- 9: first scanning unit
- 91: first driving pulley
- 92: first driven pulley
- 93: first belt
- 10: second scanning unit
- 101: second driving pulley
- 102: second driven pulley
- 103: second belt
- 11: drive device
- 12: frame
- 13: coater
- 14: coating portion
- 15: object to be measured

## Claims

1. A thickness measurement apparatus comprising:
a plate in which a long hole that extends in a first direction is formed;
a first guide portion that is provided on a first surface of the plate on one side of the long hole and that extends along the first direction;
a first measurement portion that is supported by the first guide portion and that is movable along the first direction;
a second guide portion that is provided on the first surface on the other side of the long hole and that extends along the first direction; and
a second measurement portion that is supported by the second guide portion and that is movable along the first direction,
wherein the thickness measurement apparatus measures a thickness of an object to be measured that passes through the long hole and a gap between the first measurement portion and the second measurement portion.

2. The thickness measurement apparatus according to claim 1, further comprising a positioning portion that is provided on the first surface and that performs positioning of the first guide portion and positioning of the second guide portion.

3. The thickness measurement apparatus according to claim 2, wherein the positioning portion includes a pin that is formed in the first surface and that is inserted into a hole that is used for the positioning.

4. The thickness measurement apparatus according to claim 3, wherein the first guide portion and the second guide portion are rails and are provided so as to come into contact with the pin.

5. The thickness measurement apparatus according to any one of claims 1 to 4, further comprising a drive device that moves the first measurement portion and the second measurement portion.

6. The thickness measurement apparatus according to claim 5, further comprising
a first belt that is provided on one side of the long hole and that extends along the first direction,
a first driving pulley and a first driven pulley that move the first belt,
a second belt that is provided on the other side of the long hole and that extends along the first direction, and
a second driving pulley and a second driven pulley that move the second belt, wherein
the drive device includes a motor, and
an output shaft of the motor is coupled to the first driving pulley and the second driving pulley.

7. The thickness measurement apparatus according to any one of claims 1 to 4, further comprising
a control box that is provided independently of the plate, and
a control unit that is accommodated in the control box and that controls movements of the first measurement portion and the second measurement portion.

8. The thickness measurement apparatus according to claim 5, wherein
the drive device includes a linear motor,
a stator of the linear motor is fixed to the first surface, and
the first measurement portion and the second measurement portion are fixed to a mover of the linear motor.

9. The thickness measurement apparatus according to any one of claims 1 to 4, wherein one of the first measurement portion and the second measurement portion is a radiation emission portion that emits radiation, and the other one of the first measurement portion and the second measurement portion is a detection portion that detects the radiation.

10. The thickness measurement apparatus according to any one of claims 1 to 4, wherein the plate is divided into a plurality of sections.
